# EUROPEAN PATENT APPLICATION

(11) **EP 4 844 990 A1**
(43) Date of publication of application: **25.11.2026**
(21) Application number: 24923262.0
(22) Date of filing: 22.08.2024
(51) Int. Cl.: H02K 1/32, H02K 9/19

(54) **ELECTRIC MOTOR WITH RADIAL OIL INJECTION OF ROTOR END PLATES, POWER ASSEMBLY AND ELECTRIC VEHICLE**

(30) Priority: 05.02.2024 CN 202410170003
(71) Applicant: Huawei Digital Power Technologies Co., Ltd., Shenzhen, Guangdong 518043 (CN)
(72) Inventor: ZHENG, Yang, Shenzhen, Guangdong 518043 (CN); HUANGFU, Yuzhao, Shenzhen, Guangdong 518043 (CN); LAN, Hua, Shenzhen, Guangdong 518043 (CN)
(74) Representative: Maiwald GmbH
(86) International application number: PCT/CN2024/113825
(87) International publication number: WO 2025/167052

(57) **Abstract**

This application provides a motor with radial oil spraying through a rotor end plate, a powertrain, and an electric vehicle. The motor includes a motor shaft and a motor rotor. An end face of the motor shaft includes an axial hole, an outer circumferential surface of the motor shaft includes a plurality of radial through holes, and each radial through hole communicates with the axial hole. The motor rotor includes a plurality of rotor sheets and at least one end plate. The motor shaft passes through a shaft hole of each rotor sheet and a center hole of each end plate, the plurality of rotor sheets are sequentially arranged in an axial direction of the motor, one end plate is disposed on a side of one rotor sheet facing away from another rotor sheet, the one end plate includes one end face facing away from the one rotor sheet, the one end face includes a plurality of protrusions, each protrusion includes one side face facing away from the motor shaft, the one side face of each protrusion includes through holes, and the through holes are configured to communicate with one radial through hole. Production costs of the motor are reduced while ensuring that the motor has good heat dissipation performance.

## Description

This application claims priority to Chinese Patent Application No. 202410170003.3, filed with the China National Intellectual Property Administration on February 5, 2024, entitled "MOTOR WITH RADIAL OIL SPRAYING THROUGH ROTOR END PLATE, POWERTRAIN, AND ELECTRIC VEHICLE", which is incorporated herein by reference in its entirety.

### TECHNICAL FIELD

This application relates to the field of motor technologies, and more specifically, to a motor with radial oil spraying through a rotor end plate, a powertrain, and an electric vehicle.

### BACKGROUND

In recent years, drive motors have been widely used in new energy vehicles. High power density and high torque density of the drive motors can enhance endurance ranges and space utilization of the new energy vehicles. Improving heat dissipation performance of the drive motor has become an important way to increase the high torque density and the high power density of the drive motor.

As an oil cooling technology gradually becomes a development trend for heat dissipation of the drive motors, oil-through topology structures of various motor rotors are continuously used for cooling the motor rotors, to cool rotor cores. However, in an existing drive motor, heat dissipation performance and production costs cannot be balanced.

### SUMMARY

This application provides a motor with radial oil spraying through a rotor end plate, a powertrain, and an electric vehicle, to reduce production costs of the motor while ensuring that the motor has good heat dissipation performance.

According to a first aspect, a motor with radial oil spraying through a rotor end plate is provided. The motor includes a motor shaft and a motor rotor. An end face of the motor shaft includes an axial hole, an outer circumferential surface of the motor shaft includes a plurality of radial through holes, and each radial through hole communicates with the axial hole. The motor rotor includes a plurality of rotor sheets and at least one end plate, the motor shaft passes through a shaft hole of each rotor sheet and a center hole of each end plate, the plurality of rotor sheets are sequentially arranged in an axial direction of the motor, one end plate is disposed on a side of one rotor sheet facing away from another rotor sheet, the one end plate includes one end face facing away from the one rotor sheet, the one end face includes a plurality of protrusions, each protrusion includes one side face facing away from the motor shaft, the one side face of each protrusion includes through holes, and the through holes are configured to communicate with one radial through hole.

According to the motor provided in this embodiment of this application, after entering the axial hole of the motor shaft, cooling oil flows closely to an inner wall of the axial hole of the motor shaft, flows, at an intersection of each radial through hole that communicates with the axial hole, into a through hole that communicates with the radial through hole along the radial through hole, and is sprayed out along each through hole, to cool the rotor core of the motor. In this way, an overall size of the end plate in the axial direction of the motor does not need to be processed to be too large. Only the plurality of protrusions need to be processed on the end face of the end plate facing away from the rotor core, and the through holes that communicate with the radial through hole need to be processed in the side face of each protrusion facing away from the motor shaft, so as to cool the rotor core of the motor. In this way, material usage of the end plate is reduced, weight of the motor is reduced, and production costs of the motor are reduced while ensuring that the motor has good heat dissipation performance.

In an implementation, the motor further includes a motor stator. The motor stator includes a stator core and a stator winding, an inner wall of a shaft hole of the stator core includes a plurality of winding slots extending through in the axial direction of the motor, and the stator winding is wound around the plurality of winding slots. The motor rotor is configured to be embedded into the shaft hole of the stator core, and in the axial direction of the motor, the through holes in the one side face of each protrusion are arranged on a side of one end face of the stator core facing away from another end face of the stator core.

The stator winding is wound around the winding slot of the stator core. In other words, the stator winding protrudes from the winding slot in the axial direction of the motor, and in the axial direction of the motor shaft, the stator winding is disposed on a side of one end face of the stator core facing away from another end face of the stator core. In addition, the through hole in the one side face of each protrusion is also provided on the one side of the one end face of the stator core facing away the another end face of the stator core. In this way, regardless of whether the motor is at a low speed or a high speed, cooling oil sprayed from each through hole can be sprayed onto the stator winding to cool the stator winding, thereby reducing temperature rise of the stator winding, and improving heat dissipation performance of the motor and performance of the motor, such as motor power and torque density.

In an implementation, the plurality of protrusions are spaced apart in a circumferential direction of the motor, and a spacing between two adjacent protrusions in the circumferential direction of the motor is greater than or equal to a size of each protrusion in the circumferential direction of the motor. In this way, the plurality of protrusions occupy a small area of the end face of the end plate facing away from the rotor core, thereby further saving materials of the end plate, reducing weight of the motor, and reducing production costs of the motor.

In an implementation, an inner wall of a shaft hole of the one rotor sheet includes at least one protrusion, the outer circumferential surface of the motor shaft includes at least one groove, and each protrusion on the inner wall of the shaft hole of the one rotor sheet is configured to be embedded into one groove of the motor shaft. The plurality of protrusions on the one end face of the one end plate include at least one balancing protrusion, where in the axial direction of the motor, a projection area of the at least one balancing protrusion in the plurality of protrusions is different from a projection area of another protrusion, and a distance, in a radial direction of the motor, between each protrusion on the one end face of the one end plate and a center hole of the one end plate is the same.

Generally, the protrusion on the inner wall of the axial hole of the rotor sheet and the groove in the outer circumferential surface of the motor shaft are in transition fit or interference fit, so that a center of gravity of the rotor core deviates from a rotation axis of the motor shaft, causing initial imbalance of the motor rotor. However, in this application, a protrusion on one end face of the end plate is reused, and the initial imbalance of the motor rotor is balanced by changing a size of the protrusion on the one end face of the end plate. In one aspect, an imbalance amount of the motor rotor is reduced, and balancing efficiency for the initial imbalance of the motor rotor is improved. In another aspect, the production costs of the motor rotor are reduced.

In an implementation, in the axial direction of the motor, the projection area of the at least one balancing protrusion on the one end face of the one end plate is smaller than the projection area of the another protrusion on the one end face of the one end plate, and an included angle between a line connecting the at least one balancing protrusion on the one end face of the one end plate and a center of the one end plate and a line connecting each protrusion on the inner wall of the shaft hole of the one rotor sheet and a center of the one rotor sheet is less than 90 degrees.

The imbalance amount of the motor rotor is reduced by reducing weight on a side where the protrusion on the inner wall of the rotor sheet is located, for example, by reducing the projection area of the balancing protrusion on the side where the protrusion on the inner wall of the rotor sheet is located in the axial direction of the motor.

In an implementation, in the axial direction of the motor, the projection area of the at least one balancing protrusion on the one end face of the one end plate is greater than the projection area of the another protrusion on the one end face of the one end plate, and an included angle between a line connecting the at least one balancing protrusion on the one end face of the one end plate and a center of the one end plate and a line connecting each protrusion on the inner wall of the shaft hole of the one rotor sheet and a center of the one rotor sheet is greater than 90 degrees and less than 180 degrees.

The imbalance amount of the motor rotor is reduced by increasing weight on an opposite side of the protrusion on the inner wall of the rotor sheet, for example, by increasing the projection area of the balancing protrusion on the opposite side of the protrusion on the inner wall of the rotor sheet in the axial direction of the motor.

In an implementation, in a direction in which the one end plate faces away from the one rotor sheet, the size of each protrusion on the one end face of the one end plate gradually decreases in the circumferential direction of the motor. In this way, strength of each protrusion on the one end face of the one end plate can be ensured, and weight of each protrusion can be further reduced.

In an implementation, the plurality of protrusions are connected in a circumferential direction of the motor to form an annular protrusion, and an outer diameter of the annular protrusion is less than or equal to an outer diameter of the one end plate. In this way, a processing process of the plurality of protrusions is simplified.

In an implementation, distances between the through holes in the one side face of each protrusion on the one end face of the one end plate and another end face of the one end plate are greater than a size of the one end plate in the axial direction of the motor. In this way, the cooling oil sprayed from each through hole can be sprayed onto the stator winding.

In an implementation, openings of the through holes in the one side face of each protrusion on the one end face of the one end plate are in the radial direction of the motor. Because the stator winding surrounds the plurality of protrusions in the circumferential direction of the motor, regardless of whether the motor is at a low speed or a high speed, a path for spraying the cooling oil from each through hole to the stator winding is short and smooth, thereby improving heat dissipation efficiency of the stator winding.

In an implementation, the one end plate includes the another end face facing the one rotor sheet, the another end face includes a plurality of groups of grooves, the plurality of groups of grooves are at different distances from the center hole of the one end plate, and a distance between each group of grooves and the center hole of the one end plate is negatively correlated with a minimum size of the group of grooves in the circumferential direction of the motor. In this way, a longer distance between the groove and the center hole of the one end plate indicates a higher flow rate of the cooling oil in the groove, a higher degree of turbulence, and a higher heat exchange coefficient.

In an implementation, each groove in one group of grooves in the another end face of the one end plate communicates with one radial through hole, and does not communicate with the through holes in the one side face of each protrusion. In the radial direction of the motor facing away from a central axis of the one end plate, a size of each groove in the one group of grooves increases in the circumferential direction of the motor.

In this way, a flow rate of the cooling oil flowing through one end of each groove in one group of grooves close to the radial through hole is greater than a flow rate of the cooling oil flowing through the other end of the groove facing away from the radial through hole, so that the cooling oil at the one end of the groove can be quickly guided from the one end of the groove to the other end of the groove.

In an implementation, each groove in another group of grooves in the another end face of the one end plate communicates with through holes in one side face of one protrusion, and does not communicate with one radial through hole. In the radial direction of the motor facing away from the central axis of the one end plate, a size of each groove in the another group of grooves decreases in the circumferential direction of the motor.

In this way, in the radial direction of the motor facing away from the central axis of the one end plate, a flow rate of the cooling oil flowing through each groove in the another group of grooves becomes increasingly high, so that the cooling oil flowing out of the through holes in one side face of one protrusion that communicates with the groove in another group of grooves is sprayed onto the stator winding. This expands a spraying range of the cooling oil flowing out of the through holes in one side face of one protrusion, improves utilization of the cooling oil, and further improves heat dissipation performance of the motor.

In an implementation, each groove in still another group of grooves in the another end face of the one end plate communicates with none of the center hole of the one end plate and the through holes in the one side face of each protrusion. In the radial direction of the motor, sizes of two ends of each groove in the still another group of grooves in the circumferential direction of the motor are greater than a size of a middle portion of the groove in the still another group of grooves in the circumferential direction of the motor.

In this way, a flow rate of the cooling oil flowing through the middle portion of each groove in the still another group of grooves is greater than a flow rate of the cooling oil flowing through two ends of the groove, so that the cooling oil at one end of the groove can be quickly guided by the middle portion of the groove to the other end of the groove.

In an implementation, the one rotor sheet includes two groups of cooling holes, each group of cooling holes includes a plurality of cooling holes, and the plurality of cooling holes are spaced apart in the circumferential direction of the motor. Each cooling hole in one group of cooling holes is configured to communicate with through holes in one side face of one protrusion, and each cooling hole in the other group of cooling holes is configured to communicate with the shaft hole of the one rotor sheet.

The cooling oil in each radial through hole can flow into another group of cooling holes of the rotor sheet, flow into the through holes in one side face of each protrusion along one group of cooling holes of the rotor sheet, and be sprayed out along each through hole. In this way, while cooling the stator winding of the motor, the rotor core of the motor can be further cooled. In this way, circumferential temperature distribution of the rotor sheet is even, a local hot spot is avoided, and a heat dissipation effect of the motor is improved.

According to a second aspect, a powertrain is provided. The powertrain includes a reducer and the motor according to any one of the first aspect and the possible implementations of the first aspect, and the motor shaft of the motor is in a transmission connection to an input shaft of the reducer.

The motor according to the first aspect can balance heat dissipation performance and production costs, and therefore, costs of the powertrain can be reduced.

According to a third aspect, an electric vehicle is provided. The electric vehicle includes wheels, a transmission mechanism, and the powertrain according to the second aspect, where the powertrain drives the wheels through the transmission mechanism.

The motor according to the first aspect can balance heat dissipation performance and production costs, so that performance of the electric vehicle, for example, an endurance range of the electric vehicle and space utilization, can be improved.

### BRIEF DESCRIPTION OF DRAWINGS

FIG. 1 is a diagram of a structure of an electric vehicle according to an embodiment of this application;
FIG. 2 is a diagram of a structure of a motor according to an embodiment of this application;
FIG. 3 is a diagram of an exploded structure of the motor shown in FIG. 2;
FIG. 4 is a cross-sectional view of the motor shown in FIG. 2 along a central axis of the motor;
FIG. 5 is a diagram of a structure of a rotor sheet in the motor shown in FIG. 2;
FIG. 6 is a diagram of a structure of an end plate in the motor shown in FIG. 3;
FIG. 7 is a diagram of a structure of the end plate shown in FIG. 6 in another direction;
FIG. 8 is a cross-sectional view of the end plate shown in FIG. 6 in an A-A direction;
FIG. 9 is a diagram of a structure of the end plate shown in FIG. 6 in still another direction;
FIG. 10 is a diagram of a structure of the end plate shown in FIG. 6 in still another direction;
FIG. 11 is a diagram of a structure of another end plate according to an embodiment of this application;
FIG. 12 is a diagram of a structure of the end plate shown in FIG. 11 in another direction;
FIG. 13 is a cross-sectional view of the end plate shown in FIG. 11 in a B-B direction;
FIG. 14 is a diagram of a structure of the end plate shown in FIG. 11 in still another direction;
FIG. 15 is a diagram of another exploded structure of a motor according to an embodiment of this application;
FIG. 16 is a cross-sectional view of the motor shown in FIG. 15 along a central axis of the motor;
FIG. 17 is a diagram of a structure of an end plate in the motor shown in FIG. 15;
FIG. 18 is a diagram of a structure of the end plate shown in FIG. 17 in another direction; and
FIG. 19 is a cross-sectional view of the end plate shown in FIG. 17 in a C-C direction.

### DESCRIPTION OF EMBODIMENTS

The following describes technical solutions of this application with reference to accompanying drawings.

In descriptions of embodiments of this application, "/" indicates "or" unless otherwise specified. For example, A/B may indicate A or B. In this specification, "and/or" describes only an association relationship between associated objects and indicates that three relationships may exist. For example, A and/or B may indicate the following three cases: Only A exists, both A and B exist, and only B exists.

An orientation or a position relationship indicated by the term "upper", "lower", "inner", "outer", or the like in embodiments of this application is an orientation or a position relationship based on the accompanying drawings, and is merely intended for ease of describing this application and simplifying description, but does not indicate or imply that a specified apparatus or element needs to have a specific orientation or needs to be constructed and operated in a specific orientation. Therefore, such terms cannot be understood as a limitation on this application.

Reference to "some embodiments" or the like described in this specification indicates that one or more embodiments of this application include a specific feature, structure, or characteristic described in combination with the embodiments. Therefore, statements such as "in some embodiments" that appear at different places in this specification do not necessarily mean reference to a same embodiment. Instead, the statements mean "one or more but not all of embodiments", unless otherwise specifically emphasized in another manner. The terms "include", "comprise", "have" and their variants all mean "include but are not limited to", unless otherwise specifically emphasized in another manner.

"Equal/Equals" in this application is not strictly equal/equals, but within an allowable error range. "Parallel" is not strictly parallel, but within an allowable error range. "Perpendicular" is not strictly perpendicular, but within an allowable error range.

In embodiments of this application, a same reference numeral indicates a same component part or a same part or component. In embodiments of this application, for a plurality of same parts or components, only one part or component may be marked with a reference numeral as an example in the accompanying drawings. For another same part or component, the reference numeral is also applicable. In addition, dimensions and sizes of parts or components shown in the accompanying drawings are merely examples.

An embodiment of this application provides a motor with radial oil spraying through a rotor end plate. The motor includes a motor shaft and a motor rotor. An end face of the motor shaft includes an axial hole, an outer circumferential surface of the motor shaft includes a plurality of radial through holes, and each radial through hole communicates with the axial hole. The motor rotor includes a plurality of rotor sheets and at least one end plate, the motor shaft passes through a shaft hole of each rotor sheet and a center hole of each end plate, the plurality of rotor sheets are sequentially arranged in an axial direction of the motor, one end plate is disposed on a side of one rotor sheet facing away from another rotor sheet, the one end plate includes one end face facing away from the one rotor sheet, the one end face includes a plurality of protrusions, each protrusion includes one side face facing away from the motor shaft, the one side face of each protrusion includes through holes, and the through holes are configured to communicate with one radial through hole.

According to the motor provided in this embodiment of this application, after entering the axial hole of the motor shaft, cooling oil flows closely to an inner wall of the axial hole of the motor shaft, flows, at an intersection of each radial through hole that communicates with the axial hole, into a through hole that communicates with the radial through hole along the radial through hole, and is sprayed out along each through hole, to cool the rotor core of the motor. In this way, an overall size of the end plate in the axial direction of the motor does not need to be processed to be too large. Only the plurality of protrusions need to be processed on the end face of the end plate facing away from the rotor core, and the through holes that communicate with the radial through hole need to be processed in the side face of each protrusion facing away from the motor shaft, so as to cool the motor. In this way, material usage of the end plate is reduced, weight of the motor is reduced, and production costs of the motor are reduced while ensuring that the motor has good heat dissipation performance.

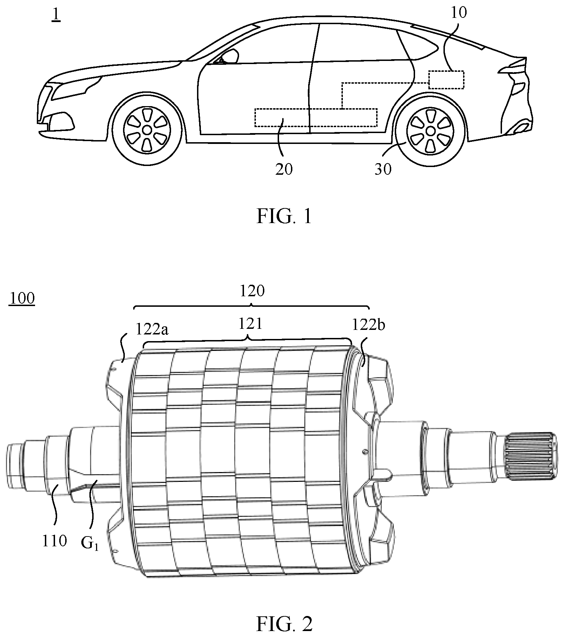

An embodiment of this application further provides an electric vehicle. The following describes in detail the electric vehicle provided in this embodiment of this application with reference to FIG. 1.

FIG. 1 is a diagram of a structure of an electric vehicle according to an embodiment of this application. As shown in FIG. 1, the electric vehicle includes one or more powertrains 10, a battery 20, and wheels 30. The powertrain 10 is configured to: receive power supplied by the battery 20 and drive the wheels 30, and the powertrain 10 is configured to convert electric energy into mechanical energy.

The electric vehicle provided in this embodiment of this application includes a pure electric vehicle, a hybrid electric vehicle, a range-extended electric vehicle, a plug-in hybrid electric vehicle, a new energy vehicle, or the like. The pure electric vehicle is also referred to as a pure electric vehicle/battery electric vehicle, or referred to as a pure EV/battery EV for short. The hybrid electric vehicle is also referred to as a hybrid electric vehicle, or referred to as an HEV for short. The range-extended electric vehicle is also referred to as a range extended electric vehicle, or referred to as an REEV for short. The plug-in hybrid electric vehicle is also referred to as a plug-in hybrid electric vehicle, or referred to as a PHEV for short. The new energy vehicle is also referred to as a new energy vehicle, or referred to as an NEV for short.

The powertrain 10 includes a motor control unit, a motor, and a reducer. The battery 20 is connected to the motor control unit. The motor control unit receives, through a direct-current input interface, a direct current transmitted by the battery 20. The motor control unit converts the direct current into an alternating current, and then transmits the alternating current to a wiring terminal of a motor winding through an alternating-current output interface, to control starting or stopping, forward rotation or reverse rotation, an increase or a decrease in a rotation speed, an increase or a decrease in a driving torque, an increase or a decrease in a braking torque, and the like of the motor. An output end of a motor shaft transmits power to the wheels 30 of the electric vehicle through the reducer, to provide power for the wheels 30.

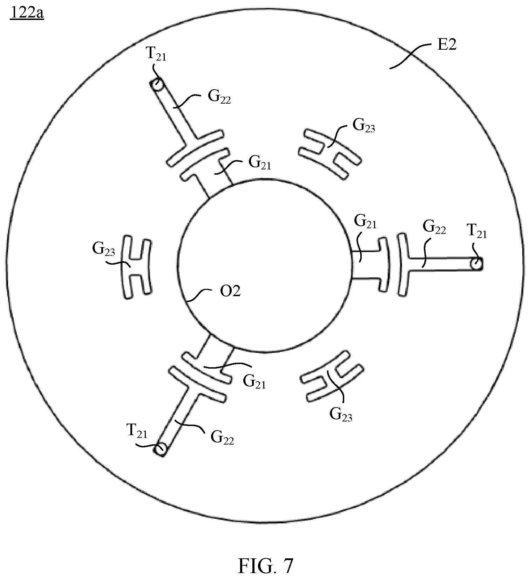

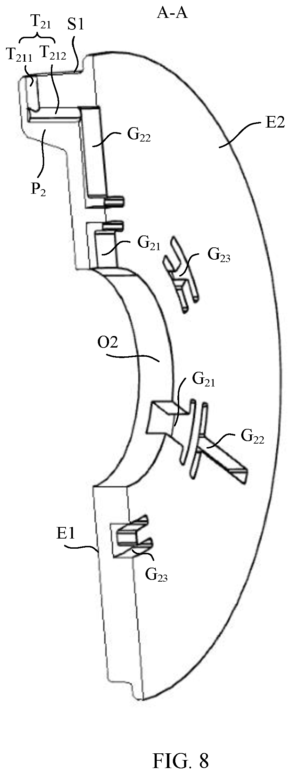

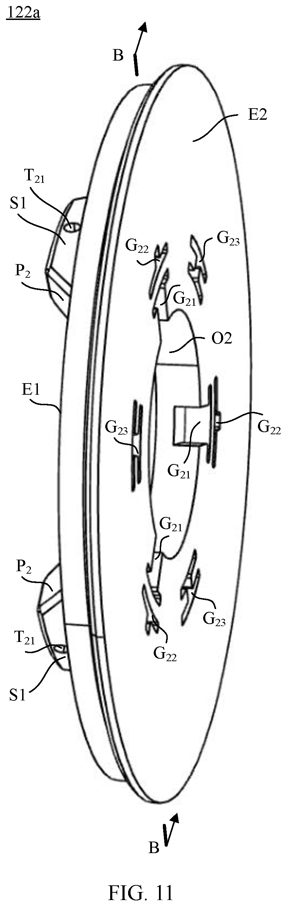

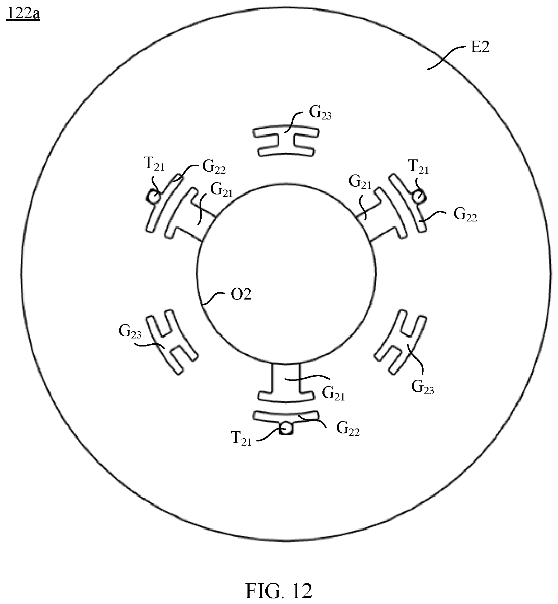

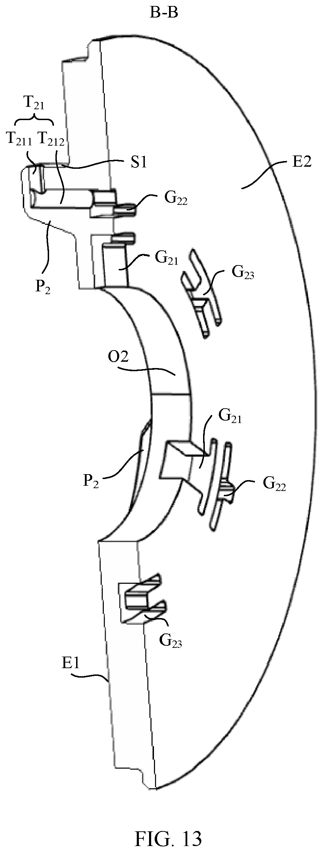

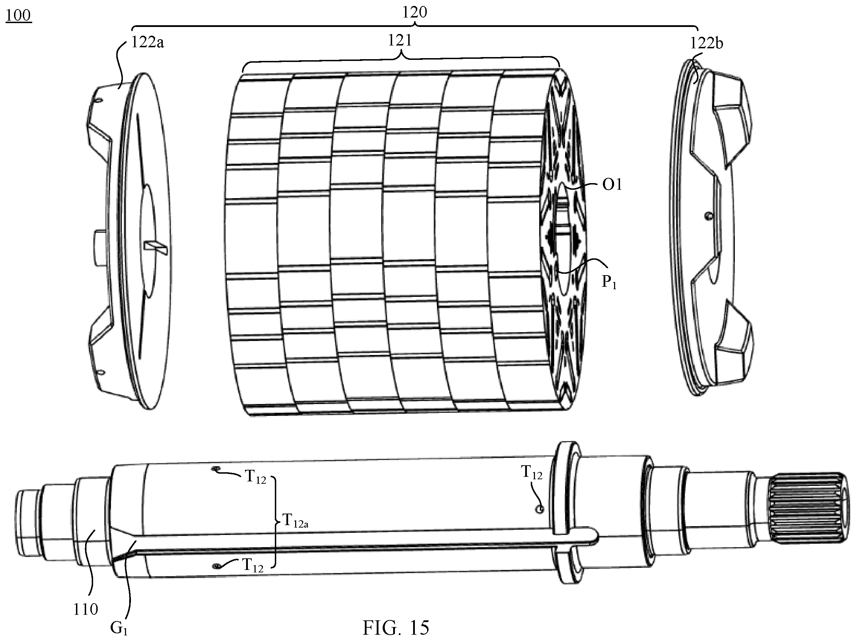

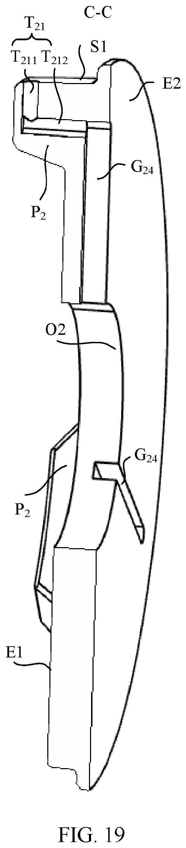

The following describes in detail a structure of the motor 100 provided in embodiments of this application with reference to FIG. 2 to FIG. 19.

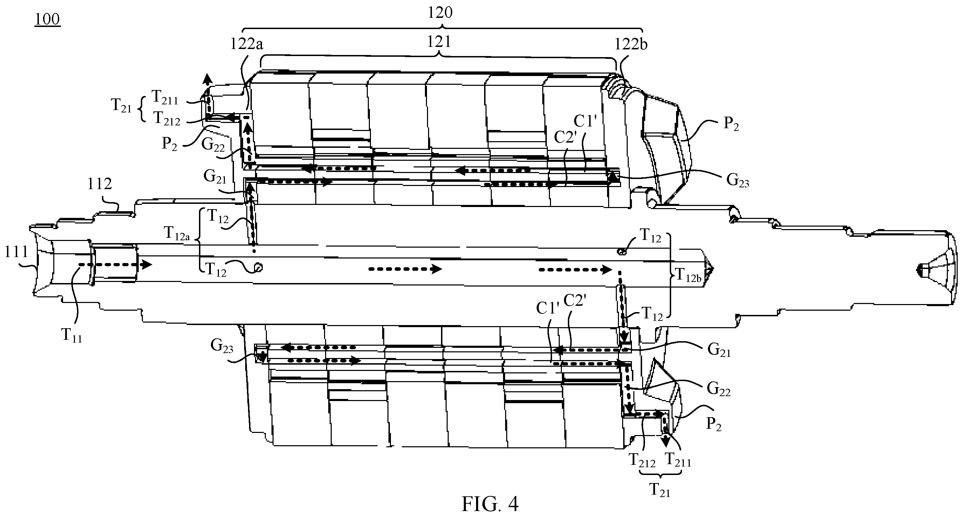

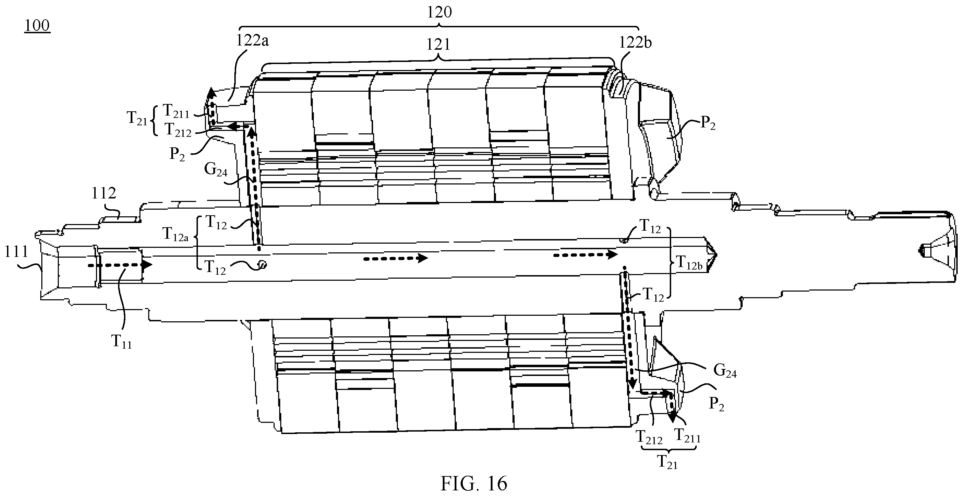

As shown in FIG. 2 to FIG. 4, FIG. 15, and FIG. 16, the motor 100 includes a motor shaft 110. As shown in FIG. 4 and FIG. 16, an end face 111 of the motor shaft 110 includes an axial hole T₁₁, and the axial hole T₁₁ extends from the end face 111 of the motor shaft 110 to the inside of the motor shaft 110 in an axial direction of the motor. An outer circumferential surface 112 of the motor shaft 110 includes a plurality of radial through holes T₁₂, and each radial through hole T₁₂ extends from the outer circumferential surface 112 of the motor shaft 110 to an inner wall of the axial hole T₁₁ in a radial direction of the motor. In other words, each radial through hole T₁₂ communicates with the axial hole T₁₁. In some embodiments, the plurality of radial through holes T₁₂ are divided into two groups, and the two groups of radial through holes are spaced apart in the axial direction of the motor. As shown in FIG. 4 and FIG. 16, the plurality of radial through holes T₁₂ are divided into one group of radial through holes T₁₂ₐ and the other group of radial through holes T_{12b}. Each group of radial through holes includes at least one radial through hole T₁₂, and a plurality of radial through holes T₁₂ in each group of radial through holes are spaced apart in a circumferential direction of the motor.

In some embodiments, a cross-sectional area of the axial hole T₁₁ is greater than a cross-sectional area of each radial through hole T₁₂. In this way, it can be ensured that a sufficient amount of cooling oil flows into the axial hole T₁₁ of the motor shaft 110, and flows into each radial through hole T₁₂ along an intersection of the axial hole T₁₁ and the radial through hole T₁₂.

In some embodiments, as shown in FIG. 2, FIG. 3, and FIG. 15, the outer circumferential surface of the motor shaft 110 includes at least one groove G₁, the groove G₁ is recessed from the outer circumferential surface 112 of the motor shaft 110 to the inside of the motor shaft 110, and a size of the groove G₁ in the axial direction of the motor is greater than a size of the groove G₁ in the circumferential direction of the motor. The groove G₁ includes a groove opening and a groove bottom that are arranged opposite to each other in the radial direction of the motor, and two groove walls that are arranged opposite to each other in the circumferential direction of the motor. In some embodiments, to easily embed a protrusion P₁ of a rotor sheet described below into the groove G₁, so as to rotatably connect the motor shaft 110 to a rotor core 121, a spacing between two groove walls at one end of the groove G₁ in the axial direction of the motor are greater than a spacing between two groove walls at the other end. In this way, in a process of assembling the motor shaft 110 with another component, an end of the motor shaft 110 may be pushed into the another component in the axial direction of the motor.

As shown in FIG. 2 to FIG. 4, FIG. 15, and FIG. 16, the motor 100 includes a motor rotor 120, the motor rotor 120 includes a rotor core 121, the rotor core 121 includes a plurality of rotor sheets, and the plurality of rotor sheets are sequentially arranged in the axial direction of the motor. In some embodiments, the plurality of rotor sheets may be further divided into a plurality of groups, and the plurality of groups of rotor sheets are sequentially and adjacently arranged in the axial direction of the motor. Each group of rotor sheets includes at least one rotor sheet.

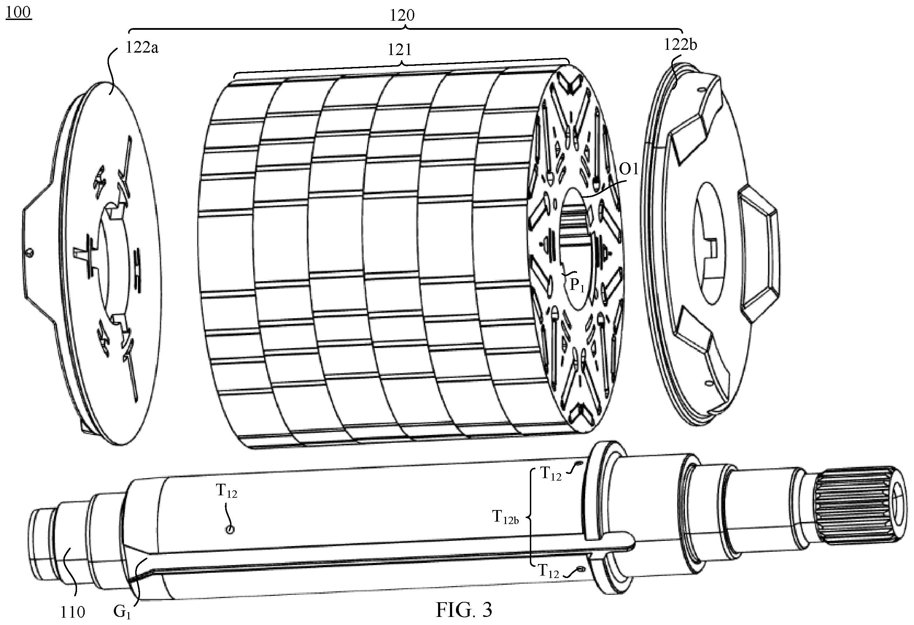

As shown in FIG. 3, FIG. 5, and FIG. 15, each rotor sheet includes a shaft hole O1 that penetrates each rotor sheet in the axial direction of the motor, and the motor shaft 110 passes through the shaft hole O1 of the rotor sheet, to implement a transmission connection between the motor shaft 110 and the rotor core 121. In some embodiments, as shown in FIG. 3, FIG. 5, and FIG. 15, an inner wall of the shaft hole O1 of each rotor sheet includes at least one protrusion P₁, and each protrusion P₁ extends from the inner wall of the shaft hole O1 to a center of the shaft hole O1. A length of the rotor core 121 in the axial direction of the motor is less than a length of the groove G₁. The groove G₁ and each protrusion P₁ are in transition or interference fit in the circumferential direction of the motor. In this way, each protrusion P₁ is configured to be embedded into one groove G₁ of the motor shaft 110.

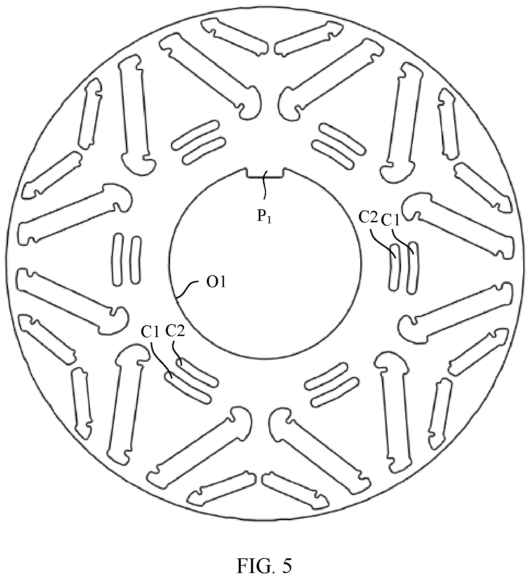

In some embodiments, each rotor sheet further includes two groups of cooling holes. As shown in FIG. 5, the two groups of cooling holes are respectively one group of cooling holes C1 and the other group of cooling holes C2. Each group of cooling holes of each rotor sheet includes at least one cooling hole. A plurality of cooling holes in each group of cooling holes of each rotor sheet are distributed around the shaft hole O1. Each cooling hole of each rotor sheet penetrates the rotor sheet in the axial direction of the motor. In the radial direction of the motor, a distance between the one group of cooling holes C1 of each rotor sheet and the shaft hole O1 of the rotor sheet is greater than a distance between the other group of cooling holes C2 and the shaft hole O1 of the rotor sheet.

In addition, each group of cooling holes of the plurality of rotor sheets of the rotor core 121 are in communication in the axial direction of the motor to form a group of cooling oil passages. In this way, the rotor core 121 includes two groups of cooling oil passages, and each group of cooling oil passages includes a plurality of cooling oil passages that are spaced apart in the axial direction of the motor. As shown in FIG. 4, the two groups of cooling oil passages are respectively one group of cooling oil passages C1' and the other group of cooling oil passages C2'.

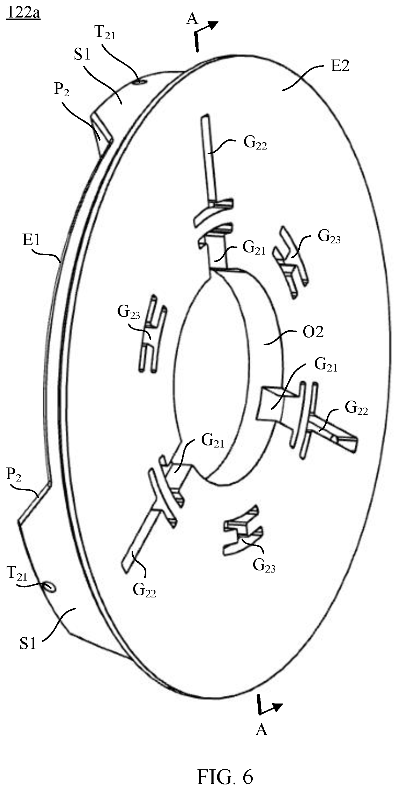

The motor rotor 120 further includes at least one end plate. As shown in FIG. 6 to FIG. 14, and FIG. 17 to FIG. 19, each end plate includes a center hole O2 that penetrates the end plate 122 in the axial direction of the motor, to implement a transmission connection between the end plate 122 and the rotor core 121.

In some embodiments, as shown in FIG. 2 to FIG. 4, FIG. 15, and FIG. 16, the motor rotor 120 includes one end plate 122a and another end plate 122b. The one end plate 122a is disposed on a side that is of one of two rotor sheets and facing away from the other rotor sheet, and the another end plate 122b is disposed on a side that is of one of another two rotor sheets and facing away from the other rotor sheet. In other words, the one end plate 122a and the another end plate 122b are arranged on two sides of the rotor core 121. In some embodiments, the motor rotor 120 includes only one of the one end plate 122a and the another end plate 122b. The following describes in detail a structure of an end plate of the motor rotor 120 by using the end plate 122a as an example.

The one end plate 122a includes one end face E1 facing away from one rotor sheet and another end face E2 facing the one rotor sheet. The one end face E1 of the one end plate 122a includes a plurality of protrusions P₂. Each protrusion P₂ includes one side face S1 facing away from the motor shaft 110. The one side face S1 of each protrusion P₂ includes through holes T₂₁, and the through holes T₂₁ are configured to communicate with one radial through hole T₁₂.

In this way, after entering the axial hole T₁₁ of the motor shaft 110, the cooling oil flows closely along an inner wall of the axial hole T₁₁ of the motor shaft 110, is distributed at an intersection of each radial through hole T₁₂ that communicates with the axial hole T₁₁, flows into the through holes T₂₁ that communicate with the radial through hole T₁₂ along the radial through hole T₁₂, and flows into the stator winding of the motor 100 along the through holes T₂₁, so that circumferential temperature distribution of the motor sheet is even, a local hot spot is avoided, and heat dissipation effect of the motor is improved.

After entering the axial hole T₁₁ of the motor shaft 110, the cooling oil flows along the inner wall of the axial hole T₁₁ of the motor shaft 110, and flows, at the intersection of each radial through hole T₁₂ that communicates with the axial hole T₁₁, into the through holes T₂₁ that communicate with the radial through hole T₁₂ along the radial through hole T₁₂, and is sprayed out along the through holes T₂₁, thereby cooling the rotor core 121 of the motor 100. In this way, an overall size of the end plate in the axial direction of the motor does not need to be processed to be too large. Only the plurality of protrusions P₂ need to be processed on the end face E1 of the end plate facing away from the rotor core 121, and the through holes T₂₁ that communicate with the radial through hole T₁₂ need to be processed in the side face S1 of each protrusion P₂ facing away from the motor shaft, so as to cool the rotor core 121 of the motor 100. In this way, material usage of the end plate is reduced, weight of the motor 100 is reduced, and production costs of the motor 100 are reduced while ensuring that the motor 100 has good heat dissipation performance.

In some embodiments, as shown in FIG. 4 or FIG. 16, the through holes T₂₁ in the one side face S1 of each protrusion P₂ include a radial through hole T₂₁₁ and an axial through hole T₂₁₂ that communicate with each other, the radial through hole T₂₁₁ extends from the one side face S1 of each protrusion P₂ on the one end face E1 of the one end plate 122a to the axial through hole T₂₁₂, and the axial through hole T₂₁₂ is configured to communicate with one radial through hole T₁₂.

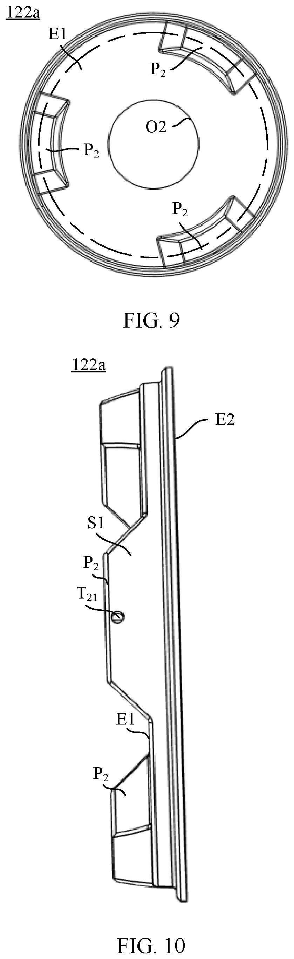

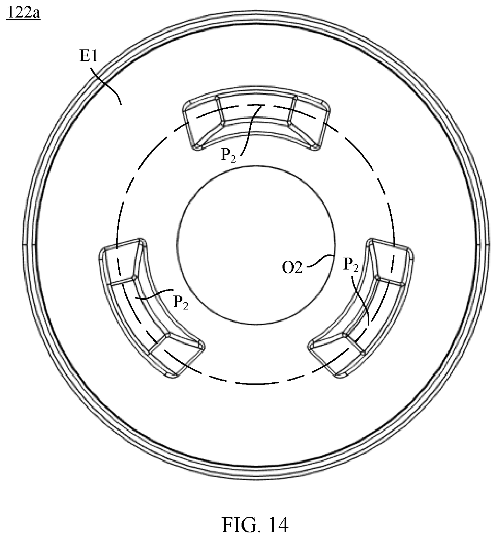

In some embodiments, as shown in FIG. 9 or FIG. 14, the plurality of protrusions P₂ are spaced apart in the circumferential direction of the motor, and a spacing between two adjacent protrusions P₂ in the circumferential direction of the motor is greater than or equal to a size of each protrusion P₂ in the circumferential direction of the motor. In this way, the plurality of protrusions P₂ occupy a small area of the one end face E1, thereby further saving materials of the end plate, reducing weight of the motor 100, and reducing production costs of the motor 100.

In some embodiments, as shown in FIG. 9 or FIG. 14, the plurality of protrusions P₂ are evenly spaced apart in the circumferential direction of the motor. In this way, a processing process of the plurality of protrusions P₂ is simplified.

In some embodiments, as shown in FIG. 10, in the axial direction of the motor from one end plate 122a to one rotor sheet, the size of each protrusion P₂ on the one end face E1 of the one end plate 122a gradually decreases in the circumferential direction of the motor. In this way, strength of each protrusion P₂ on the one end face of the one end plate 122a can be ensured, and weight of each protrusion P₂ can be further reduced.

In some embodiments, distances between the through holes T₂₁ in the one side face S1 of each protrusion P₂ on the one end face E1 of the one end plate 122a and another end face E2 of the one end plate 122a are greater than a size of the one end plate 122a in the axial direction of the motor. In this way, the cooling oil sprayed from each through hole T₂₁ can be sprayed onto the stator winding.

In some embodiments, openings of the through holes T₂₁ in the one side face S1 of each protrusion P₂ on the one end face E1 of the one end plate 122a are in the radial direction of the motor. Because the stator winding surrounds the plurality of protrusions P₂ in the circumferential direction of the motor, regardless of whether the motor 100 is at a low speed or a high speed, a path for spraying the cooling oil from each through hole T₂₁ to the stator winding is short and smooth, thereby improving heat dissipation efficiency of the stator winding.

In an embodiment in which the through holes T₂₁ in the one side face S1 of each protrusion P₂ include the radial through hole T₂₁₁ and the axial through hole T₂₁₂, that the openings of the through holes T₂₁ in the one side face S1 of each protrusion P₂ on the one end face E1 of the one end plate 122a are in the radial direction of the motor may be understood as: In the radial direction of the motor, the radial through hole T₂₁₁ extends from the one side face S1 of each protrusion P₂ on the one end face E1 of the one end plate 122a to the axial through hole T₂₁₂.

In some embodiments, a distance, in the radial direction of the motor, between each protrusion P₂ on the one end face E1 of the one end plate 122a and the center hole O2 of the one end plate 122a is the same. In addition, in the radial direction of the motor, a distance between the one side face S1 of each protrusion P₂ on the one end face E1 of the one end plate 122a and the center hole O2 of the one end plate 122a is less than a radius of the one end plate 122a.

In some embodiments, in the radial direction of the motor, the distance between each protrusion P₂ on the one end face E1 of the one end plate 122a and the center hole O2 of the one end plate 122a may be designed according to a requirement.

For example, in the radial direction of the motor, the distance between each protrusion P₂ on the one end face E1 of the one end plate 122a and the center hole O2 of the one end plate 122a is designed according to a spatial arrangement requirement of components of the motor 100. In this way, internal space of the motor 100 can be fully utilized, and interference of spatial layouts of the components of the motor 100 can also be avoided.

For example, the stator winding of the motor 100 is formed by a flat wire, and an inner layer of flat wire close to a shaft hole of the stator core has an expansion opening. In this case, in the radial direction of the motor, the distance between each protrusion P₂ on the one end face E1 of the one end plate 122a and the center hole O2 of the one end plate 122a may be designed to be smaller. In this way, a sufficient safety distance can be maintained between the stator winding and each protrusion P₂ on the one end face E1 of the one end plate 122a.

For another example, if the stator winding of the motor 100 is formed by a circular wire, and an inner diameter formed by the stator winding is small, in the radial direction of the motor, the distance between each protrusion P₂ on the one end face E1 of the one end plate 122a and the center hole O2 of the one end plate 122a may be designed to be smaller. In this way, a sufficient safety distance can be maintained between the stator winding and each protrusion P₂ on the one end face E1 of the one end plate 122a.

In some embodiments, the protrusion P₁ on the inner wall of the axial hole O1 of the rotor sheet and the groove G₁ in the outer circumferential surface of the motor shaft 110 are in transition fit or interference fit, so that a center of gravity of the rotor core 121 deviates from a rotation axis of the motor shaft 110, causing initial imbalance of the motor rotor 120. Therefore, in this application, the protrusion P₂ on the one end face E1 of the end plate may be reused, and the initial imbalance of the motor rotor 120 is balanced by changing a size of the protrusion P₂ on the one end face E1 of the end plate. In this way, an initial imbalance amount of the motor rotor 120 is reduced, balancing efficiency for the initial imbalance of the motor rotor 120 is improved, and the production costs of the motor rotor 120 are reduced.

Specifically, the plurality of protrusions P₂ on the one end face E1 of the one end plate 122a include at least one balancing protrusion P₂₁. In the axial direction of the motor, a projection area of at least one balancing protrusion P₂₁ in the plurality of protrusions P₂ is different from a projection area of another protrusion P₂, and the distance, in the radial direction of the motor, between each protrusion P₂ on the one end face E1 of the one end plate 122a and the center hole O2 of the one end plate 122a is the same. Due to the existence of the at least one balancing protrusion P₂₁, the plurality of protrusions P₂ on the one end face E1 of the one end plate 122a are not rotationally symmetrical with respect to a center of the center hole O2 of the one end plate 122a, and the at least one balancing protrusion P₂₁ can reduce the initial imbalance amount of the motor rotor 120. In this way, the initial imbalance amount of the motor rotor 120 is reduced by changing a size of at least one balancing protrusion P₂₁ in the plurality of protrusions P₂ on the one end face E1 of the one end plate 122a, and the protrusion P₂ on the one end face E1 of the one end plate 122a is reused, thereby reducing a weight correction amount and time of the motor rotor 120, and improving dynamic balance efficiency of the motor rotor 120.

In an example, the initial imbalance amount of the motor rotor 120 is reduced by reducing weight of the protrusion P₂ on a side where the protrusion P₁ is located, for example, by reducing a projection area of the balancing protrusion P₂₁ on the side where the protrusion P₁ on the inner wall of the rotor sheet is located in the axial direction of the motor. In this embodiment, in the axial direction of the motor, the projection area of at least one balancing protrusion P₂₁ on the one end face E1 of the one end plate 122a is less than the projection area of the another protrusion P₂ on the one end face of the one end plate 122a, and an included angle between a line connecting the at least one balancing protrusion P₂₁ on the one end face E1 of the one end plate 122a and a center of the one end plate 122a and a line connecting each protrusion P₁ on the inner wall of the shaft hole O1 of one rotor sheet and a center of the one rotor sheet is less than 90 degrees.

In an example, the initial imbalance amount of the motor rotor 120 is reduced by increasing weight of the protrusion P₂ located on an opposite side of the protrusion P₁, for example, by increasing a projection area of the balancing protrusion P₂₁ located on the opposite side of the protrusion P₁ on the inner wall of the rotor sheet in the axial direction of the motor. In this embodiment, in the axial direction of the motor, the projection area of at least one balancing protrusion P₂₁ on the one end face E1 of the one end plate 122a is greater than the projection area of the another protrusion P₂ on the one end face of the one end plate 122a, and an included angle between a line connecting the at least one balancing protrusion P₂₁ on the one end face E1 of the one end plate 122a and a center of the one end plate 122a and a line connecting each protrusion P₁ on the inner wall of the shaft hole O1 of one rotor sheet and a center of the one rotor sheet is greater than 90 degrees and less than 180 degrees.

For example, the projection area of the at least one balancing protrusion P₂₁ in the axial direction of the motor may be changed by changing a size of the at least one balancing protrusion P₂₁ in the circumferential direction or the radial direction of the motor.

It should be noted that the line connecting the balancing protrusion P₂₁ and the center of the one end plate 122a may be understood as a line connecting a center of the balancing protrusion P₂₁ and the center of the one end plate 122a. The line connecting each protrusion P₁ and the center of the one rotor sheet may be understood as a line connecting a center of each protrusion P₁ and the center of the one rotor sheet.

In some embodiments, the plurality of protrusions P₂ are connected in the circumferential direction of the motor to form an annular protrusion, and an outer diameter of the annular protrusion is less than or equal to an outer diameter of the one end plate 122a. In this way, a processing process of the plurality of protrusions P₂ is simplified. In addition, a smaller inner diameter of the annular protrusion indicates a smaller circumference of the annular protrusion and less material used for the annular protrusion.

In some embodiments, the another end face E2 of the one end plate 122a includes at least one group of grooves, each group of grooves includes a plurality of grooves, the plurality of grooves in each group of grooves are spaced apart in the circumferential direction of the motor, and each groove is recessed from the another end face E2 of the one end plate 122a to the inside of the one end plate 122a. In some embodiments, the plurality of grooves in each group of grooves are evenly spaced apart in the axial direction of the motor, so that a processing process of each group of grooves can be simplified, and an imbalance amount of the one end plate 122a can be further reduced.

When the another end face E2 of the one end plate 122a includes a plurality of groups of grooves, distances between the plurality of groups of grooves and the center hole O2 of the one end plate 122a are not equal, and a distance between each group of grooves and the center hole O2 of the one end plate 122a is negatively correlated with a minimum size of the group of grooves in the circumferential direction of the motor. In this way, a longer distance between the groove and the center hole O2 of the one end plate 122a indicates a higher flow rate of the cooling oil in the groove, a higher degree of turbulence, and a higher heat exchange coefficient.

The following describes in detail a structure of each group of grooves in the another end face E2 of the one end plate 122a with reference to FIG. 6 to FIG. 8, FIG. 11 to FIG. 13, and FIG. 17 to FIG. 19.

In some embodiments, as shown in FIG. 6 to FIG. 8, and FIG. 11 to FIG. 13, each groove G₂₁ in one group of grooves in the another end face E2 of the one end plate 122a communicates with the center hole O2 of the one end plate 122a, and does not communicate with the through holes T₂₁ in the one side face S1 of each protrusion P₂. In addition, as shown in FIG. 4, each groove G₂₁ in one group of grooves in the another end face E2 communicates with one radial through hole T₁₂.

In the radial direction of the motor facing away from a central axis of the one end plate 122a, a size of each groove G₂₁ in one group of grooves increases in the circumferential direction of the motor. In some embodiments, in the radial direction of the motor facing away from the central axis of the one end plate 122a, a size of each groove G₂₁ in one group of grooves gradually increases in the circumferential direction of the motor. In some embodiments, in the radial direction of the motor facing away from the central axis of the one end plate 122a, each groove G₂₁ in one group of grooves includes two portions that are connected to each other in the radial direction of the motor, and a size of the portion of the groove G₂₁ facing the radial through hole T₁₂ in the circumferential direction of the motor is smaller than a size of the other portion of the groove G₂₁.

In this way, a flow rate of the cooling oil flowing through one end of each groove G₂₁ in one group of grooves is greater than a flow rate of the cooling oil flowing through the other end of the groove G₂₁, so that the cooling oil at the one end of the groove G₂₁ can be quickly guided by the one end of the groove G₂₁ to the other end of the groove G₂₁. One end of each groove G₂₁ is an end of the groove G₂₁ close to the radial through hole T₁₂, and the other end of the groove G₂₁ is an end of the groove G₂₁ facing away from the radial through hole T₁₂.

In some embodiments, as shown in FIG. 4, the other end of each groove G₂₁ in one group of grooves is configured to connect to one cooling oil passage in the other group of cooling oil passages C2' of the rotor core 121. In this way, coolant in each groove G₂₁ in one group of grooves in the one end plate 122a can flow into one cooling oil passage in the other group of cooling oil passages C2' of the rotor core 121, thereby cooling the rotor core 121.

In some embodiments, as shown in FIG. 6 to FIG. 8, and FIG. 11 to FIG. 13, each groove G₂₂ in another group of grooves in the another end face E2 does not communicate with one radial through hole T₁₂, and communicates with the through holes T₂₁ in the one side face S1 of one protrusion P₂.

In the radial direction of the motor facing away from the central axis of the one end plate 122a, a size of each groove G₂₂ in another group of grooves decreases in the circumferential direction of the motor. In this way, in the radial direction of the motor facing away from the central axis of the one end plate 122a, a flow rate of the cooling oil flowing through each groove G₂₂ in another group of grooves becomes increasingly high, so that the cooling oil flowing out of the through holes T₂₁ in one side face S1 of one protrusion P₂ that communicates with the groove G₂₂ in the another group of grooves is sprayed onto the stator winding. This expands a spraying range of the cooling oil flowing out of the through holes T₂₁ in one side face S1 of one protrusion P₂, improves utilization of the cooling oil, and further improves heat dissipation performance of the motor 100.

In some embodiments, as shown in FIG. 4, one end of each groove G₂₂ in another group of grooves close to the center hole O2 of the one end plate 122a is configured to connect to one cooling oil passage in the one group of cooling oil passages C1' of the rotor core 121. In this way, coolant in each cooling oil passage in the one group of cooling oil passages C1' of the rotor core 121 can flow into one groove G₂₂ in another group of grooves in the one end plate 122a, and be sprayed out along the through holes T₂₁ in one side face S1 of one protrusion P₂ on the one end plate 122a, thereby cooling the rotor core 121 and cooling the stator winding outside the rotor core 121.

In some embodiments, as shown in FIG. 6 to FIG. 8, and FIG. 11 to FIG. 13, each groove G₂₃ in still another group of grooves in the another end face E2 does not communicate with the center hole O2 of the one end plate 122a and the through holes T₂₁ in the one side face S1 of each protrusion P₂.

In the radial direction of the motor, sizes of two ends of each groove G₂₃ in the still another group of grooves in the circumferential direction of the motor are greater than a size of a middle portion of the groove G₂₃ in the still another group of grooves in the circumferential direction of the motor. In this way, a flow rate of the cooling oil flowing through the middle portion of each groove G₂₃ in still another group of grooves is greater than a flow rate of the cooling oil flowing through the two ends of the groove G₂₃, so that the cooling oil at one end of the groove G₂₃ can be quickly guided by the middle portion of the groove G₂₃ to the other end of the groove G₂₃.

In some embodiments, as shown in FIG. 4, one end of each groove G₂₃ in still another group of grooves is configured to connect to another cooling oil passage in the other group of cooling oil passages C2' of the rotor core 121, and the other end of the groove G₂₃ in the still another group of grooves is configured to connect to another cooling oil passage in the one group of cooling oil passages C1' of the rotor core 121. In the circumferential direction of the motor, another cooling oil passage in the other group of cooling oil passages C2' is arranged adjacent to one cooling oil passage in the other group of cooling oil passages C2'. In the circumferential direction of the motor, another cooling oil passage in the one group of cooling oil passages C1' is arranged adjacent to one cooling oil passage in the one group of cooling oil passages C1'. In this way, coolant in each cooling oil passage in the other group of cooling oil passages C2' of the rotor core 121 can flow into one groove G₂₃ in the still another group of grooves, and then flow into one cooling oil passage in the one group of cooling oil passages C1' of the rotor core 121 along each groove G₂₃ in the another group of grooves, thereby cooling the rotor core 121.

In some embodiments, in the radial direction of the motor, one group of grooves are arranged between another group of grooves and the center hole O2 of the one end plate 122a. In the circumferential direction of the motor, one groove G₂₃ in still another group of grooves is arranged between two grooves in one group of grooves, or in the circumferential direction of the motor, one groove G₂₂ in still another group of grooves is arranged between two grooves in another group of grooves.

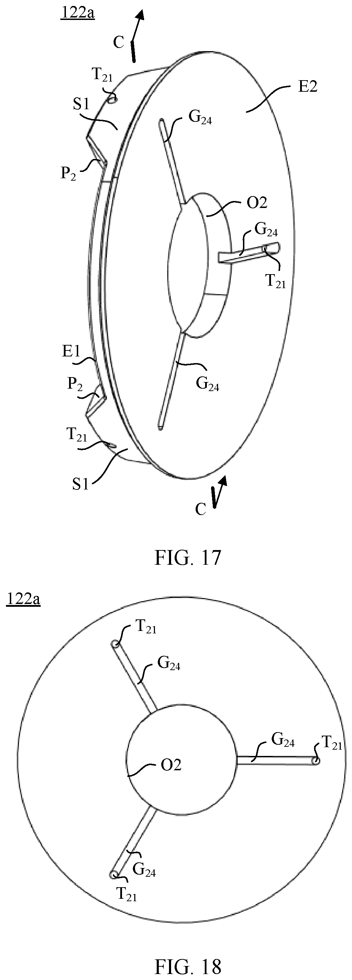

In some embodiments, as shown in FIG. 17 to FIG. 19, each groove G₂₄ in yet another group of grooves in the another end face E2 communicates with the center hole O2 of the one end plate 122a, and also communicates with the through holes T₂₁ in one side face S1 of each protrusion P₂. In addition, each groove G₂₄ in yet another group of grooves in the another end face E2 also communicates with one radial through hole T₁₂.

In some embodiments, in the radial direction of the motor facing away from the central axis of the one end plate 122a, a size of each groove G₂₄ in yet another group of grooves gradually decreases in the circumferential direction of the motor.

In this way, in the radial direction of the motor facing away from the central axis of the one end plate 122a, a flow rate of the cooling oil flowing through each groove G₂₄ in the yet another group of grooves becomes increasingly high, so that the cooling oil flowing out of the through holes T₂₁ in one side face S1 of one protrusion P₂ that communicates with the groove G₂₄ in yet another group of grooves is sprayed onto the stator winding. This expands a spraying range of the cooling oil flowing out of the through holes T₂₁ in one side face S1 of one protrusion P₂, improves utilization of the cooling oil, and further improves heat dissipation performance of the motor 100.

It should be noted that an example in which each group of grooves shown in FIG. 6 to FIG. 8, FIG. 11 to FIG. 13, and FIG. 17 to FIG. 19 includes three grooves should not constitute a limitation on this application. In addition, the plurality of protrusions P₂, one group of grooves, another group of grooves, still another group of grooves, and yet another group of grooves included in each end plate of the motor rotor 120 may be implemented in combination or separately. This is not limited in this application.

In some embodiments, a structure of the one end plate 122a is the same as that of the another end plate 122b. In this way, a processing process of the end plate of the motor rotor 120 can be simplified, and production costs of the end plate of the motor rotor 120 can be reduced.

In an example, the one end plate 122a and the another end plate 122b each include the plurality of protrusions P₂, one group of grooves, another group of grooves, and still another group of grooves described above. In addition, in the axial direction of the motor, each groove G₂₁ in one group of grooves in the one end plate 122a is aligned with one groove G₂₃ in still another group of grooves in the another end plate 122b.

In this example, as shown in FIG. 4, after the coolant is injected into the axial hole T₁₁ of the motor shaft 110, under the action of a centrifugal force when the motor 100 runs, the coolant flows along an inner surface of the axial hole T₁₁ of the motor shaft 110. A portion of the coolant flows, at an intersection of one axial hole T₁₁ and one radial through hole T₁₂ in one group of radial through holes T₁₂ₐ of the motor shaft 110, into one groove G₂₁ in one group of grooves in the one end plate 122a, and flows into one groove G₂₃ in still another group of grooves in the another end plate 122b along the another group of cooling oil passages C2' of the rotor core 121. Then, the coolant in one groove G₂₃ in still another group of grooves in the another end plate 122b flows into one groove G₂₂ in another group of grooves in the one end plate 122a along the one group of cooling oil passages C1' of the rotor core 121, and is sprayed out along the through holes T₂₁ in one protrusion P₂ on the one end face E1 of the one end plate 122a. Another portion of the coolant flows, at an intersection of another axial hole T₁₁ of the motor shaft 110 and one radial through hole T₁₂ in another group of radial through holes T_{12b}, into one groove G₂₁ in one group of grooves in the another end plate 122b, and flows into one groove G₂₃ in still another group of grooves in the one end plate 122a along the another group of cooling oil passages C2' of the rotor core 121. Then, the coolant in one groove G₂₃ in still another group of grooves in the one end plate 122a flows into one groove G₂₂ in another group of grooves in the another end plate 122a along the one group of cooling oil passages C1' of the rotor core 121, and is sprayed out along the through holes T₂₁ in one protrusion P₂ on the one end face E1 of the another end plate 122b. In this way, heat dissipation of the motor 100 is implemented.

In another example, the one end plate 122a and the another end plate 122b each include yet another group of grooves described above. In addition, in the axial direction of the motor, each groove G₂₄ in yet another group of grooves in the one end plate 122a and one groove G₂₄ in yet another group of grooves in the another end plate 122b are arranged in a staggered manner.

As shown in FIG. 16, after the coolant is injected into the axial hole T₁₁ of the motor shaft 110, under the action of a centrifugal force when the motor 100 runs, the coolant flows along an inner surface of the axial hole T₁₁ of the motor shaft 110. A portion of the coolant flows, at an intersection of one axial hole T₁₁ and one radial through hole T₁₂ in one group of radial through holes T₁₂ₐ of the motor shaft 110, into one groove G₂₄ in yet another group of grooves in the one end plate 122a, and is sprayed out along the through holes T₂₁ in one protrusion P₂ on the one end face E1 of the one end plate 122a. Another portion of the coolant flows, at an intersection of another axial hole T₁₁ of the motor shaft 110 and one radial through hole T₁₂ in another group of radial through holes T_{12b}, into one groove G₂₄ in yet another group of grooves in the another end plate 122b, and is sprayed out along the through holes T₂₁ in one protrusion P₂ on the one end face E1 of the another end plate 122b. In this way, heat dissipation of the motor 100 is implemented.

In some embodiments, a structure of the one end plate 122a is different from that of the another end plate 122b. In this way, weight of the end plate of the motor rotor 120 can be reduced.

In an example, the one end face E1 of the one end plate 122a includes a plurality of protrusions P₂, and the another end face E2 of the one end plate 122a includes one group of grooves G₂₁ and another group of grooves G₂₂. An end face of the another end plate 122b facing the rotor core 121 includes still another group of grooves G₂₁.

In another example, the another end face E2 of the one end plate 122a includes one group of grooves G₂₁. An end face of the another end plate 122b facing away from the rotor core 121 includes a plurality of protrusions P₂, and an end face of the another end plate 122b facing the rotor core 121 includes another group of grooves G₂₂.

In still another example, the one end face E1 of the one end plate 122a includes a plurality of protrusions P₂, and the another end face E2 of the one end plate 122a includes another group of grooves G₂₂. An end face of the another end plate 122b facing the rotor core 121 includes still another group of grooves G₂₁.

In this example, each cooling hole in one group of cooling holes C1 of one of two rotor sheets is configured to communicate with the through holes T₂₁ in the one side face S1 of the one protrusion P₂ of the one end plate 122a, and each cooling hole in the other group of cooling holes C2 is configured to communicate with an axial hole O1 of the one rotor sheet. In addition, each cooling hole in the other group of cooling holes C2 of one of the two rotor sheets communicates with one radial through hole T₁₂.

In this way, after the coolant is injected into the axial hole T₁₁ of the motor shaft 110, under the action of a centrifugal force when the motor 100 runs, the coolant flows along an inner surface of the axial hole T₁₁ of the motor shaft 110. A portion of the coolant flows, at an intersection of one axial hole T₁₁ and one radial through hole T₁₂ in one group of radial through holes T₁₂ₐ of the motor shaft 110, into another group of cooling holes C2 of one of the two rotor sheets, and flows into one groove G₂₃ in still another group of grooves in the another end plate 122b along the another group of cooling oil passages C2' of the rotor core 121. Then, the coolant in one groove G₂₃ in still another group of grooves in the another end plate 122b flows into one groove G₂₂ in another group of grooves in the one end plate 122a along the one group of cooling oil passages C1' of the rotor core 121, and is sprayed out along the through holes T₂₁ in one protrusion P₂ on the one end face E1 of the one end plate 122a. Another portion of the coolant flows, at an intersection of another axial hole T₁₁ of the motor shaft 110 and one radial through hole T₁₂ in another group of radial through holes T_{12b}, into one group of cooling holes C1 of one of another two rotor sheets, and flows into one groove G₂₃ in still another grooves in the one end plate 122a along the another group of cooling oil passages C2' of the rotor core 121. Then, the coolant in one groove G₂₃ in still another group of grooves in the one end plate 122a flows into one groove G₂₂ in another group of grooves in the another end plate 122a along the one group of cooling oil passages C1' of the rotor core 121, and is sprayed out along the through holes T₂₁ in one protrusion P₂ on the one end face E1 of the another end plate 122b. In this way, heat dissipation of the motor 100 is implemented.

In some embodiments, the motor 100 further includes a motor stator. The motor stator includes a stator core and a stator winding, an inner wall of a shaft hole of the stator core includes a plurality of winding slots extending through in the axial direction of the motor, and the stator winding is wound around the plurality of winding slots. In other words, the stator winding protrudes from the winding slot in the axial direction of the motor, and in the axial direction of the motor shaft, the stator winding is disposed on a side of one end face of the stator core facing away from another end face of the stator core. In addition, the motor rotor 120 is configured to be embedded into the shaft hole O1 of the stator core, and in the axial direction of the motor, the through holes T₂₁ in the one side face S1 of each protrusion P₂ are arranged on a side of one end face of the stator core facing away from another end face of the stator core. In this way, regardless of whether the motor 100 is at a low speed or a high speed, cooling oil sprayed from each through hole T₂₁ can be sprayed onto the stator winding to cool the stator winding, thereby reducing temperature rise of the stator winding, and improving heat dissipation performance of the motor 100 and performance of the motor 100, such as motor power and torque density.

In some embodiments, in the axial direction of the motor, distances between the through holes T₂₁ in the one side surface S1 of each protrusion P₂ and one end face of the stator core are set based on a distance between one end of the stator winding and the one end face of the stator core. One end of the stator winding is an end of one end face of the stator winding facing away from the stator core.

For example, if the distance between one end of the stator winding and one end face of the stator core is L, in the axial direction of the motor, a value range of the distances between the through holes T₂₁ in one side face S1 of each protrusion P₂ and one end face of the stator core is $\left[\frac{L}{3}, \frac{2}{3}L\right]$. In this way, regardless of whether the motor 100 is at a low speed or a high speed, cooling oil sprayed from each through hole T₂₁ can be sprayed to a portion that is of the stator winding close to a middle area and that protrudes from a winding slot, so that temperature rise of the stator winding can be effectively controlled, a cooling effect on the stator winding is improved, and heat dissipation performance of the motor 100 and performance of the motor 100, such as motor power and torque density, are improved.

For example, types of the cooling oil in embodiments of this application include but are not limited to glycol cooling oil, synthetic oil, mineral oil, and the like.

It should be noted that the axial direction of the motor in embodiments of this application may be understood as an axial direction of the motor shaft 110, an axial direction of the rotor core 121, or an axial direction of the stator core. The radial direction of the motor may be understood as a radial direction of the motor shaft 110, a radial direction of the rotor core 121, or a radial direction of the stator core. The circumferential direction of the motor may be understood as a circumferential direction of the motor shaft 110, a circumferential direction of the rotor core 121, or a circumferential direction of the stator core.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A motor with radial oil spraying through a rotor end plate, wherein the motor comprises:
a motor shaft, wherein an end face of the motor shaft comprises an axial hole, an outer circumferential surface of the motor shaft comprises a plurality of radial through holes, and each radial through hole communicates with the axial hole; and
a motor rotor, wherein the motor rotor comprises a plurality of rotor sheets and at least one end plate, the motor shaft passes through a shaft hole of each rotor sheet and a center hole of each end plate, the plurality of rotor sheets are sequentially arranged in an axial direction of the motor, one end plate is disposed on a side of one rotor sheet facing away from another rotor sheet, the one end plate comprises one end face facing away from the one rotor sheet, the one end face comprises a plurality of protrusions, each protrusion comprises one side face facing away from the motor shaft, the one side face of each protrusion comprises through holes, and the through holes are configured to communicate with one radial through hole.

2. The motor according to claim 1, wherein the motor further comprises:
a motor stator, wherein the motor stator comprises a stator core and a stator winding, an inner wall of a shaft hole of the stator core comprises a plurality of winding slots extending through in the axial direction of the motor, and the stator winding is wound around the plurality of winding slots; and
the motor rotor is configured to be embedded into the shaft hole of the stator core, and in the axial direction of the motor, the through holes in the one side face of each protrusion are arranged on a side of one end face of the stator core facing away from another end face of the stator core.

3. The motor according to claim 1 or 2, wherein the plurality of protrusions are spaced apart in a circumferential direction of the motor, and a spacing between two adjacent protrusions in the circumferential direction of the motor is greater than or equal to a size of each protrusion in the circumferential direction of the motor.

4. The motor according to claim 3, wherein an inner wall of a shaft hole of the one rotor sheet comprises at least one protrusion, the outer circumferential surface of the motor shaft comprises at least one groove, and each protrusion on the inner wall of the shaft hole of the one rotor sheet is configured to be embedded into one groove of the motor shaft; and
the plurality of protrusions on the one end face of the one end plate comprise at least one balancing protrusion, wherein in the axial direction of the motor, a projection area of the at least one balancing protrusion in the plurality of protrusions is different from a projection area of another protrusion, and a distance, in a radial direction of the motor, between each protrusion on the one end face of the one end plate and a center hole of the one end plate is the same.

5. The motor according to claim 4, wherein in the axial direction of the motor, the projection area of the at least one balancing protrusion on the one end face of the one end plate is smaller than the projection area of the another protrusion on the one end face of the one end plate, and an included angle between a line connecting the at least one balancing protrusion on the one end face of the one end plate and a center of the one end plate and a line connecting each protrusion on the inner wall of the shaft hole of the one rotor sheet and a center of the one rotor sheet is less than 90 degrees; or
in the axial direction of the motor, the projection area of the at least one balancing protrusion on the one end face of the one end plate is greater than the projection area of the another protrusion on the one end face of the one end plate, and an included angle between a line connecting the at least one balancing protrusion on the one end face of the one end plate and a center of the one end plate and a line connecting each protrusion on the inner wall of the shaft hole of the one rotor sheet and a center of the one rotor sheet is greater than 90 degrees and less than 180 degrees.

6. The motor according to any one of claims 1 to 5, wherein in a direction in which the one end plate faces away from the one rotor sheet, the size of each protrusion on the one end face of the one end plate gradually decreases in the circumferential direction of the motor.

7. The motor according to claim 1 or 2, wherein the plurality of protrusions are connected in a circumferential direction of the motor to form an annular protrusion, and an outer diameter of the annular protrusion is less than or equal to an outer diameter of the one end plate.

8. The motor according to any one of claims 1 to 7, wherein distances between the through holes in the one side face of each protrusion on the one end face of the one end plate and another end face of the one end plate are greater than a size of the one end plate in the axial direction of the motor; and
openings of the through holes in the one side face of each protrusion on the one end face of the one end plate are in the radial direction of the motor.

9. The motor according to any one of claims 1 to 8, wherein the one end plate comprises the another end face facing the one rotor sheet, the another end face comprises a plurality of groups of grooves, the plurality of groups of grooves are at different distances from the center hole of the one end plate, and a distance between each group of grooves and the center hole of the one end plate is negatively correlated with a minimum size of the group of grooves in the circumferential direction of the motor.

10. The motor according to any one of claims 1 to 9, wherein each groove in one group of grooves in the another end face of the one end plate communicates with one radial through hole, and does not communicate with the through holes in the one side face of each protrusion, wherein
in the radial direction of the motor facing away from a central axis of the one end plate, a size of each groove in the one group of grooves increases in the circumferential direction of the motor.

11. The motor according to any one of claims 1 to 10, wherein each groove in another group of grooves in the another end face of the one end plate communicates with through holes in one side face of one protrusion, and does not communicate with one radial through hole, wherein
in the radial direction of the motor facing away from the central axis of the one end plate, a size of each groove in the another group of grooves decreases in the circumferential direction of the motor.

12. The motor according to any one of claims 1 to 11, wherein each groove in still another group of grooves in the another end face of the one end plate communicates with none of the center hole of the one end plate and the through holes in the one side face of each protrusion, wherein
in the radial direction of the motor, sizes of two ends of each groove in the still another group of grooves in the circumferential direction of the motor are greater than a size of a middle portion of the groove in the still another group of grooves in the circumferential direction of the motor.

13. The motor according to any one of claims 1 to 8, wherein the one rotor sheet comprises two groups of cooling holes, each group of cooling holes comprises a plurality of cooling holes, and the plurality of cooling holes are spaced apart in the circumferential direction of the motor, wherein
each cooling hole in one group of cooling holes is configured to communicate with through holes in one side face of one protrusion, and each cooling hole in the other group of cooling holes is configured to communicate with the shaft hole of the one rotor sheet.

14. A powertrain, wherein the powertrain comprises a reducer and the motor according to any one of claims 1 to 13, wherein the motor shaft is in a transmission connection to an input shaft of the reducer.

15. An electric vehicle, wherein the electric vehicle comprises wheels, a transmission mechanism, and the powertrain according to claim 14, wherein the powertrain drives the wheels through the transmission mechanism.
